# EUROPEAN PATENT APPLICATION

(11) **EP 1 401 199 A2**
(43) Date of publication of application: **24.03.2004**
(21) Application number: 03018321.4
(22) Date of filing: 12.08.2003
(51) Int. Cl.: H04N 5/50

(54) **Television receiver and television broadcast receiving method**

(30) Priority: 11.09.2002 JP 2002265680
(71) Applicant: Kabushiki Kaisha Toshiba, Tokyo (JP)
(72) Inventor: Yamashita, Keita, 1-1 Shibaura 1-chome Minato-ku Tokyo 105 (JP)
(74) Representative: Henkel, Feiler & Hänzel

(57) **Abstract**

An apparatus and a method for automatically searching for and presetting a plurality of broadcast channels having one of a first and a second modulation modes.

First, the first preset process is executed to select sequentially one of the plurality of broadcast channels, attempt to detect the first broadcast signal subjected to the first modulation mode, in each of the selected broadcast channels, and register broadcast channels in which the first broadcast signal is detected. Then, the second preset process is executed to select sequentially one of the plurality of broadcast channels. During the selection, if the channel to be selected matches one of the broadcast channels already registered during the first preset process, then the selection of this broadcast channel is skipped and the next broadcast channel is selected. Then, an attempt is made to detect the second broadcast signal subjected to the second modulation mode, in the selected channel. In this manner, broadcast channels in which the second broadcast signal is detected are registered.

## Description

The present invention relates to a broadcast receiving apparatus and a broadcast receiving method for receiving, for example, a television broadcast, and in particular, to improvements in a function for automatically searching for and presetting a large number of broadcast channels.

As is well known, current television broadcast receivers comprise, as a function for presetting broadcast channels, an "auto channel preset function" for automatically searching for and presetting a large number of broadcast channels.

The auto channel preset function sequentially varies a reception frequency step by step at predetermined increments from a lower frequency to a higher frequency and carries out detection as to whether or not a television signal can be correctly received at each reception frequency.

Then, the reception frequencies at which television signals can be correctly received are sequentially registered in a nonvolatile memory in association with, for example, channel numbers for corresponding broadcast stations.

In television broadcasting, a broadcast mode, i.e. a frequency band, a standard mode, a modulation mode, and the like for broadcasting television signals vary significantly among countries or areas.

For example, European areas employ a mode of executing a negative modulation process on television signals (a B/G, I, or D/K system) and a mode of executing a positive modulation process on television signals (an L system).

In connection with one of these modes, the current auto channel preset function varies the reception frequency step by step at predetermined increments to search for broadcast channels through which television signals can be correctly received, and registers these broadcast channels in a memory.

Subsequently, in connection with another mode, the current auto channel preset function varies the reception frequency step by step at predetermined increments to search for broadcast channels through which television signals can be correctly received, and registers these broadcast channels in the memory.

However, the current auto channel preset function repeatedly performs the same searching operation on each of the negative and positive modulation modes.

That is, the time required from the start to end of the auto channel preset is simply double the time required for the auto channel preset for one of the modulation modes. It has thus been desirable to reduce this time.

According to Jpn. Pat. Appln. KOKAI Publication No. 7-212665, for each of a plurality of countries and areas, broadcast data from broadcast stations present in that country or area is stored in the memory beforehand.

Then, if a user inputs identification data identifying a country or area, the broadcast data corresponding to the identification data is read from the memory and preset. Such simplification of a preset operation is disclosed in the above publication.

However, with the configuration shown in the above publication, broadcast data from a broadcast station is stored in the memory beforehand. Accordingly, every time an increase in the number of broadcast stations, a change in method, or the like occurs, the broadcast data must be updated.

It is an object of the present invention to provide a broadcast receiving apparatus and a broadcast receiving method which reduce the time required to search for broadcast channels when automatically searching for and presetting broadcast channels in connection with, for example, the negative or positive modulation broadcast mode.

According to first aspect of the present invention, there is provided a broadcast receiving apparatus characterized by comprising:
First preset process means (18, 19, 22, 25, 28, 29) for selecting one of a plurality of broadcast channels, attempting to detect a first broadcast signal subjected to a first modulation mode in each of the selected broadcast channels, and registering broadcast channels in which the first broadcast signal is detected;
second preset process means for selecting one of the plurality of broadcast channels, attempting to detect a second broadcast signal subjected to a second modulation mode in each of the selected broadcast channels, and registering broadcast channels in which the second broadcast signal is detected; and
preset control means (25) for providing control as sequentially executes either the first or second preset process means in response to a preset request and skips an operation of detecting the broadcast signals for the broadcast channels detected during the subsequently executed preset process means and matching the broadcast channels registered during the previously executed preset process means.

According to second aspect of the present invention, there is provided a broadcast receiving method characterized by comprising:
first preset process step which is executed to select sequentially one of the plurality of broadcast channels, attempt to detect the first broadcast signal subjected to the first modulation mode, in each of the selected broadcast channels, and register broadcast channels in which the first broadcast signal is detected; and
second preset process step which is executed to select sequentially one of the plurality of broadcast channels, during the selection, if the channel to be selected matches one of the broadcast channels already registered during the first preset process, then the selection of this broadcast channel is skipped and the next broadcast channel is selected, then, an attempt is made to detect the second broadcast signal subjected to the second modulation mode, in the selected channel, in this manner, broadcast channels in which the second broadcast signal is detected are registered.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing a television broadcast receiver according to an embodiment of the present invention;
FIG. 2 is a block diagram showing the details of a signal processing system of the television broadcast receiver according to the embodiment;
FIG. 3 is flow chart showing an auto channel preset operation preformed by the television broadcast receiver according to the embodiment;
FIG. 4 is flow chart showing an auto channel preset operation preformed by the television broadcast receiver according to the embodiment;
FIGS. 5A, 5B, 5C, 5D, and 5E are sequence diagrams simply showing the characteristics of an auto preset operation performed by the television broadcast received according to the embodiment;
FIG. 6 is flow chart showing another example of an auto channel preset operation performed by the television broadcast receiver according to the embodiment;
FIG. 7 is a view showing a DVD recording and reproduction apparatus according to another embodiment of the present invention; and
FIG. 8 is a block diagram showing a signal processing system of the DVD recording and reproduction apparatus according to the embodiment.

Embodiments of the present invention will be described below in detail with reference to the drawings.

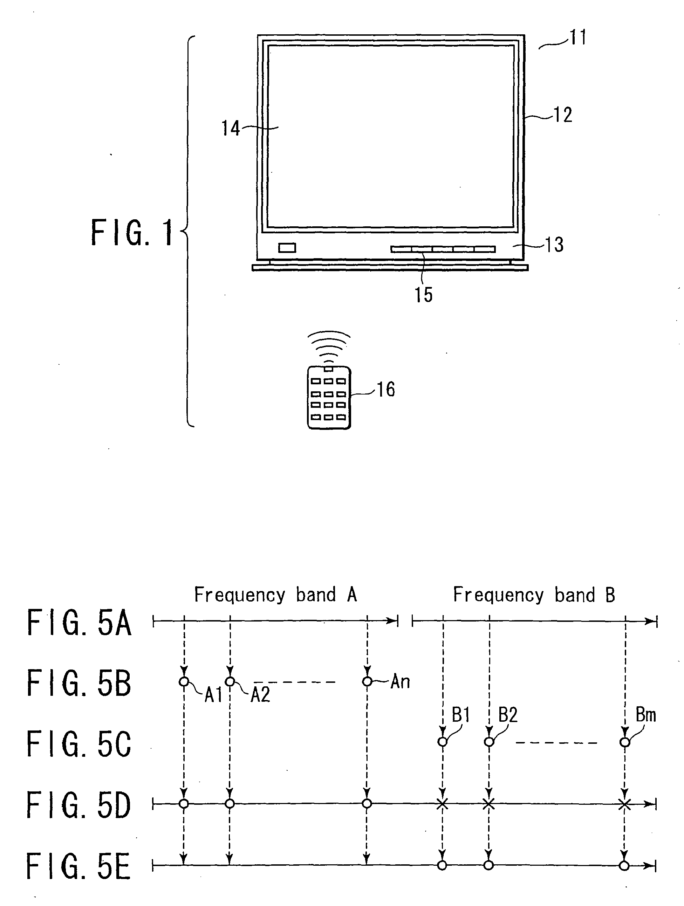

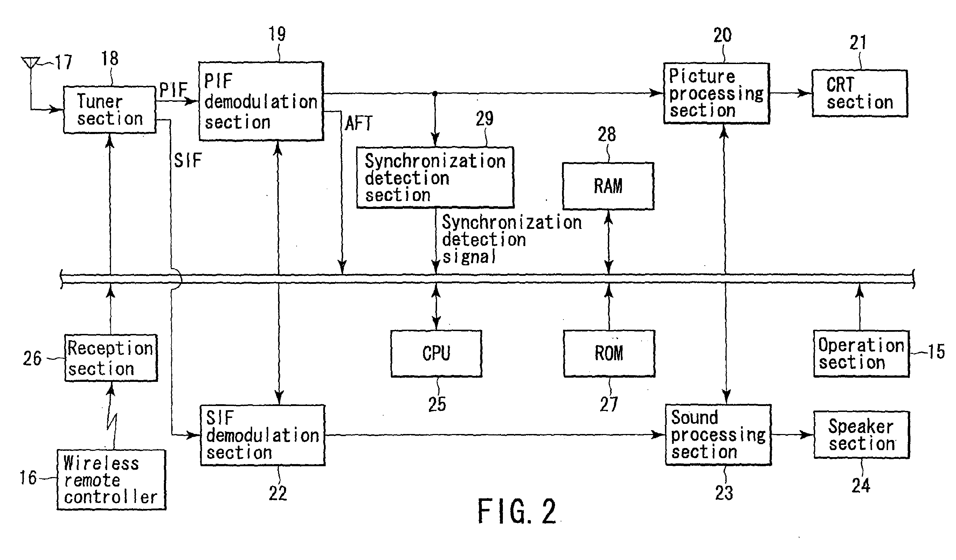

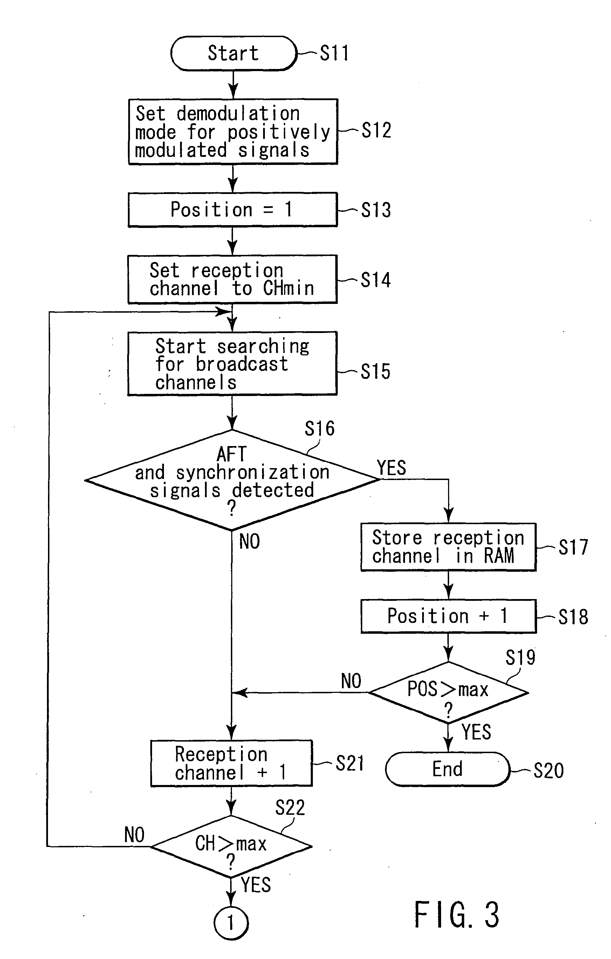

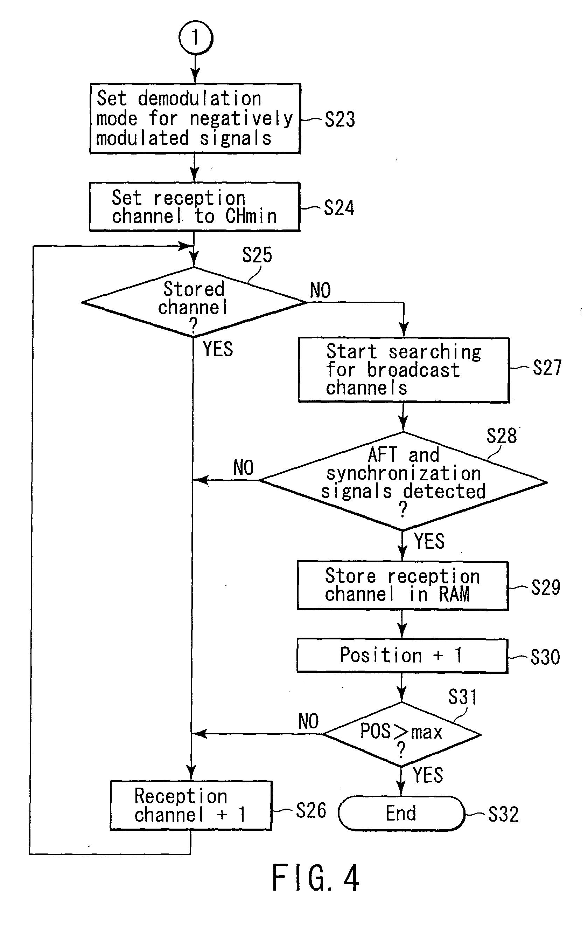

FIG. 1 is a view showing a television broadcast receiver 11 according to an embodiment of the present invention.

The television broadcast receiver 11 comprises a housing 12 formed like a box and having a front surface portion 13 on which a picture display screen 14 and an operation section 15 composed of a power switch and various keys are arranged.

Further, the television broadcast receiver 11 receives operation information not only from the operation section 15 but also from a wireless remote controller 16 to control its own operations.

FIG. 2 is a block diagram showing the details of a signal processing system of the television broadcast receiver 11 according to this embodiment.

First, in FIG. 2, reference numeral 17 denotes an antenna that receives television broadcast electric waves.

A television signal received by the antenna 17 is supplied to a tuner section 18 based on a PLL (Phase Locked Loop) frequency synthesizing method.

In this case, the tuner section 18 mixes a received television signal with a local oscillation signal to generate a PIF (Picture Intermediate Frequency) signal and an SIF (Sound Intermediate Frequency) signal.

A PIF demodulation section 19 demodulates the PIF signal into a base band picture signal. Then, a picture processing section 20 executes signal processing on the base band picture signal for picture display. Subsequently, a CRT (Cathode Ray Tube) section 21 displays a picture on the picture display screen 14.

Further, an SIF demodulation section 22 is supplied with the SIF signal and demodulates it into a sound signal. A sound processing section 23 then processes the signal for sound reproduction. Subsequently, a speaker section 24 reproduces sound.

A CPU (Central Processing Unit) 25 controls the series of reproduction operations for television signals in a unified manner. The CPU obtains operation information from the operation section 15 or from the remote controller 16 via a reception section 26 to control the sections 18 to 20, 22, and 23 so as to establish an operational state desired by a user.

In this case, the CPU 25 controls the sections 18 to 20, 22, and 23 on the basis of control programs stored in a ROM (Read Only Memory) 27 and various set values or the like recorded in a non-volatile RAM (Random Access Memory) 28, using the RAM 28 as a work area.

Here, on the basis of the inputted PIF signal, the PIF demodulation section 19 generates an AFT (Automatic Fine Tuning) signal utilized to automatically search for broadcast channels and outputs this signal to the CPU 25. This AFT signal is available whether a picture signal is based on positive or negative modulation.

Further, a synchronization detection section 29 is supplied with a base band picture signal outputted by the PIF demodulation section, to detect a synchronization signal. A synchronization detection signal outputted by the synchronization detection section 29 is outputted to the CPU 25.

Furthermore, the SIF demodulation section 22 detects a sound carrier in the inputted SIF signal. The sound carrier has a frequency of 5.5 MHz for the B/G system, 6.0 MHz for the I system, and 6.5 MHz for the D/K and L systems. A carrier detection signal outputted by the SIF demodulation section 22 is outputted to the CPU 25.

FIGS. 3 and 4 are flow charts showing an auto channel preset operation preformed by the television broadcast receiver 11 according to this embodiment.

First, when a request is issued in step S11 to start an auto channel preset operation, then in step S12, the CPU 25 sets the PIF demodulation section 19 in a mode in which television signals subjected to a positive modulation process are demodulated.

Then, in step S13, the CPU 25 sets the position POS of an area in the RAM 28 in which preset data is stored, to 1. In step S14, the CPU 25 sets a reception channel CH to its smallest value CHmin.

Subsequently, in step S15, the CPU 25 starts searching for broadcast channels for the currently set reception channel CH. In step S16, the CPU 25 determines whether or not both the AFT signal and the synchronization detection signal are detected.

Then, if both the AFT signal and the synchronization detection signal are detected (YES), the CPU 25 determines that a television signal subjected to a positive modulation process has been correctly reproduced. In step S17, the CPU 25 stores the current reception channel CH at the currently set position POS in association with the corresponding broadcast channel.

Subsequently, in step S18, the CPU 25 adds 1 to the current position POS. In step S19, the CPU 25 determines whether or not the position POS has exceeded its maximum value max. If the position has exceeded its maximum value max (YES), the CPU 25 ends the process (step S20).

Further, if both the AFT signal and the synchronization detection signal are not detected in step S16 (NO) or the position POS is at its maximum value max in step S19, then in step S21, the CPU 25 adds 1 to the current reception channel to set the reception frequency to a value larger than that for the current frequency by a specified value.

In step S22, the CPU 25 determines whether or not the reception channel CH has exceeded its maximum value max. If the reception channel CH has its maximum value max or smaller, the CPU 25 is returned to the processing in step S15.

Further, if the reception channel CH exceeds its maximum value max in step S22 (YES), the CPU 25 sets, in step S23, the PIF demodulation section 19 in a mode in which television signals subjected to a negative modulation process are demodulated.

Subsequently, in step S24, the CPU 25 sets the reception channel CH to its smallest value CHmin. In step S25, the CPU 25 determines whether or not the currently set reception channel CH matches one of the reception channels CH already stored in the RAM 28.

Then, if the currently set reception channel CH matches one of the reception channels CH already stored in the RAM 28 (YES), then in step S26, the CPU 25 adds 1 to the current reception channel to set the reception frequency to a value larger than that for the current frequency by the specified value. The CPU is then returned to the processing in step S25.

Alternatively, if the currently set reception channel CH matches none of the reception channels CH already stored in the RAM 28 (NO), then in step S27, the CPU 25 starts searching for broadcast channels at the currently set reception channel CH.

Then, in step S28, the CPU 25 determines whether or not both the AFT signal and the synchronization detection signal are detected. If both of these signals are not detected (NO), the CPU 25 shifts to the processing in step S26.

Then, if both the AFT signal and the synchronization detection signal are detected in step S28 (YES), then in step S29, the CPU 25 stores the current reception channel CH at the currently set position POS in association with the corresponding broadcast channel.

Subsequently, in step S30, the CPU adds 1 to the current position POS. In step S31, it is determined whether or not the position POS has exceeded its maximum value max. If the position has not exceeded its maximum value max (NO), the CPU shifts to the processing in step S26. On the other hand, if the position POS has exceeded its maximum value (YES), the CPU ends the process (step S32).

FIGS. 5A, 5B, 5C, 5D, and 5E are sequence diagrams simply showing the characteristics of an auto preset operation performed by the television broadcast received according to the above embodiment.

As shown in FIG. 5A, it is assumed that there are two types of frequency bands A and B and that a plurality of broadcast channels A1, A2, ... An based on the positive modulation mode are present in the frequency band A as shown in FIG. 5B, while a plurality of broadcast channels B1, B2, ... Bm based on the negative modulation mode are present in the frequency band B as shown in FIG. 5C.

First, the PIF demodulation section 19 is set in a mode in which television signals subjected to a positive modulation process are demodulated. Then, as shown in FIG. 5D, a search for broadcast channels is started by sequentially varying the reception channel CH step by step from a lower frequency to a higher frequency.

Then, in the frequency band A, the AFT signal and the synchronization detection signal can be simultaneously detected in reception channels CH at which the broadcast channels A1, A2, ... An, respectively, are present. Thus, the reception channels CH at which the broadcast channels A1, A2, ... An, respectively, are present are preset as reception channels through which television signals have been correctly reproduced as shown by circles in FIG. 5D.

On the other hand, in the frequency band B, the AFT signal is detected but the synchronization detection signal is not in reception channels CH at which broadcast channels B1, B2, ... Bm, respectively, are present. Thus, the reception channels CH at which broadcast channels B1, B2, ... Bm, respectively, are present are determined not to be able to reproduce television signals correctly. These reception channels are thus controlled so as not to be preset as shown by crosses in FIG. 5D.

Then, the PIF demodulation section 19 is switched to a mode in which television signals subjected to a negative modulation process are demodulated. Then, as shown in FIG. 5E, a search for broadcast channels is started by sequentially varying the reception channel CH step by step from a lower frequency to a higher frequency.

In the frequency band A, the reception channels CH at which the broadcast channels A1, A2, ... An are present have already been preset. Thus, the operation of detecting the AFT signal and the synchronization detection signal is not performed on the reception channels CH matching the reception channels CH at which the broadcast channels A1, A2, ... An are present. That is, the detection operation is skipped to shift unconditionally to the next reception channel.

Then, both the AFT signal and the synchronization detection signal can be detected in the reception channels CH at which the broadcast channels B1, B2, ... Bm are present. Thus, the reception channels CH at which the broadcast channels A1, A2, ... An, respectively, are present are preset as reception channels through which television signals have been correctly reproduced as shown by circles in FIG. 5D.

According to the above embodiment, in the mode in which television signals subjected to a negative modulation process are demodulated, the operation of detecting the AFT signal and the synchronization detection signal is not performed on the reception channels CH matching the already preset broadcast channels A1, A2, ... An, in the mode in which television signals subjected to a positive modulation process are demodulated. In other words, the operation of determining whether or not a television signal can be correctly reproduced is not performed. That is, the detection operation is skipped.

In other words, in the mode in which television signals subjected to a negative modulation process are demodulated, the operation of detecting the AFT signal and drawing in the synchronization detection signal is performed but the series of operations of determining whether or not the synchronization signal is obtained is not, on the reception channels CH matching the already preset broadcast channels A1, A2, ... An in the mode in which television signals subjected to a positive modulation process. That is, the detection operation is skipped. This correspondingly reduces the time required to search for broadcast channels.

Further, in the above embodiment, a search for broadcast channels is carried out first in the mode in which television signal subjected to a positive modulation process are demodulated and then in the mode in which television signal subjected to a negative modulation process are demodulated.

However, the present invention is not limited to this order. Of course, a search for broadcast channels may be carried out first in the mode in which television signal subjected to a negative modulation process are demodulated first and then in the mode in which television signal subjected to a positive modulation process are demodulated.

Furthermore, it is contemplated that at least one of the operation section 15 and the remote controller 16 is provided with a switch used to allow the user to make selection as to which demodulation mode is used first to search for broadcast channels.

This allows the user to start searching for broadcast channels by selecting the demodulation mode corresponding to a modulation mode involving more broadcast channels depending on the country or area in which the user is present. This further reduces the time required to search for broadcast channels.

In this case, the switch used to select the demodulation mode may be adapted to allow the user to select the country or area or the modulation mode.

In this case, the broadcast channels received by the television broadcast receiver 11 may include cable television broadcast channels. In cable television broadcast, all the television signals through the broadcast channels are modulated and transmitted using the same modulation mode.

Thus, when broadcast channels are searched for in a demodulation mode for a modulation mode not corresponding to cable television broadcast, the reception channel CH can be controlled to skip the broadcast frequency bands for the cable television broadcast. This is effective in reducing the time required to search for broadcast channels.

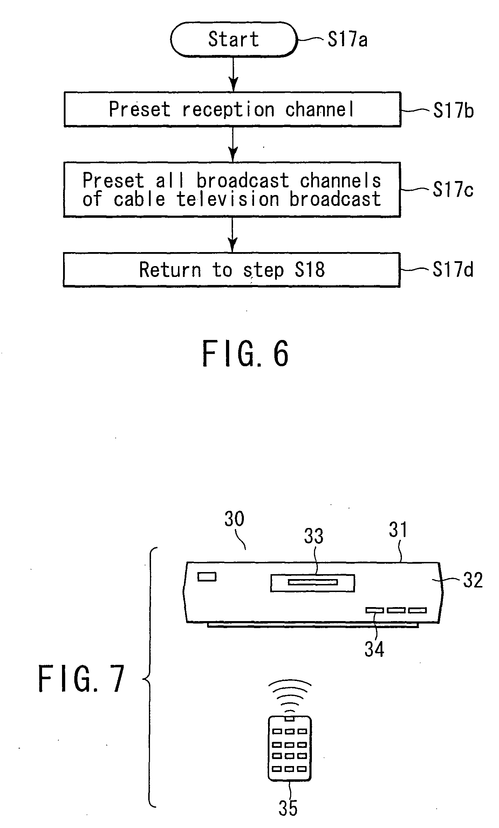

FIG. 6 is a flow chart illustrating another auto channel preset operation performed by the television broadcast receiver 11 according to the above embodiment. Here, description will be given of au auto channel preset operation performed if the broadcast channels received by the television broadcast receiver 11 include cable television broadcast channels.

In the flow chart shown in FIG. 6, the processing in step S17, described in FIG. 3, is changed. The precondition is assumed to be that data indicative of all the broadcast channels of cable television broadcast is already recorded in the RAM 28.

When the process is started (in step S17a) by detecting the AFT signal and the synchronization detection signal in step S16, described above, the CPU 25 presets the current reception channel CH in the RAM 28 in step S17b.

Subsequently, in step S17c, for a broadcast channel of cable television broadcast, the CPU 25 presets all the broadcast channels of the cable television broadcast. Then, in step S17d, the CPU 25 is returned to the processing in step S18.

In the description of the above embodiment, the present invention is applied to the television broadcast receiver 11. However, the present invention is not limited to this aspect but is applicable to, for example, a DVD (Digital Versatile Disk) recording and reproduction apparatus.

FIG. 7 is a view showing a DVD recording and reproduction apparatus 30 according to another embodiment of the present invention.

The DVD recording and reproduction apparatus 30 has a function for receiving television signals to record picture or sound information or the like from the signals on the DVD or reading and externally outputting the picture or sound information from the DVD.

The DVD recording and reproduction apparatus 30 comprises a housing 31 formed like a thin box and having a front surface portion 32 on which a DVD installing section 33 and an operation section 34 composed of a power switch and various keys are arranged.

Further, the DVD recording and reproduction apparatus 30 receives operation information not only from the operation section 34 but also from a wireless remote controller 35 to control its own operations.

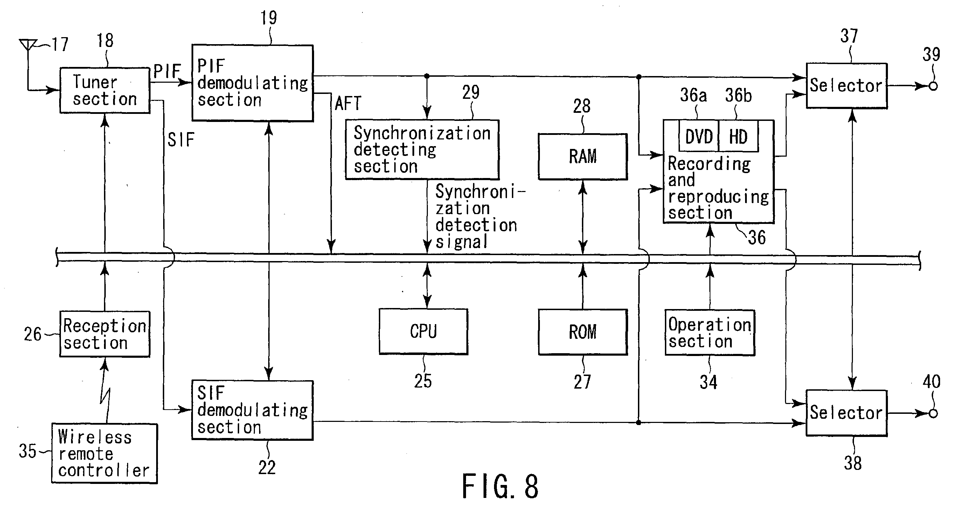

FIG. 8 is a block diagram showing a signal processing system of the DVD recording and reproduction apparatus 30 according to this embodiment. In FIG. 8, the same elements as those in FIG. 2 are denoted by the same reference numerals.

A picture signal outputted by the PIF demodulation section 19 is supplied to a recording and reproduction section 36 and to one of the input ends of a selector 37. Further, a sound signal outputted by the SIF demodulation section 22 is supplied to the recording and reproduction section 36 and to one of the input ends of a selector 38.

The recording and reproduction section 36 has a function of selectively recording the inputted picture and sound signals on one or both of a DVD 36a and a built-in hard disk 36b.

Further, the recording and reproduction section 36 reads picture and sound signals from the DVD 36a or the hard disk 36b, the read signals are output to the other input terminal of selector 37, 38.

Further, the recording and reproduction section 36 reads a picture and sound signals from the DVD 36a to record these signals on the hard disk 36b or reads a picture and sound signal from the hard disk 36b to record these signals on the DVD 36a.

In this case, the selector 37 functions to selectively guide picture signals outputted by the PIF demodulation section 19 and the recording and reproduction section 36, respectively, to an external output terminal 39.

Further, the selector 38 functions to selectively guide sound signals outputted by the SIF demodulation section 22 and the recording and reproduction section 36, respectively, to an external output terminal 40.

However, in FIG. 8, the recording and reproduction section 36 is not limited to the one having a function of recording and reproduction data on and from both DVD 36a and hard disk 36b. For example, the recording and reproduction section 36 may have a function of recording and reproduction data on and from either the DVD 36a or the hard disk 36b. Further, the storage medium is not limited to a DVD or hard disk, and other media can be used.

As is apparent from the above description, the broadcast receiving apparatus according to the present invention comprises a first preset process of sequentially selecting one of a plurality of broadcast channels, attempting to detect a first broadcast signal subjected to a first modulation mode (for example, a positive modulation mode), in each of the selected broadcast channels, and registering broadcast channels in which the first broadcast signal is detected; a second preset process of sequentially selecting one of the plurality of broadcast channels, attempting to detect a second broadcast signal subjected to a second modulation mode (for example, a negative modulation mode), in each of the selected broadcast channels, and registering broadcast channels in which the second broadcast signal is detected, and a preset control process of providing such control as sequentially executes either the first or second preset process in response to a preset request and skips an operation of detecting the broadcast signals for the broadcast channels detected during the subsequently executed preset process and matching the broadcast channels registered during the previously executed preset process.

The preset control process provides control when one of the broadcast channels is selected during the subsequently executed preset process, so as to skip the selection of a broadcast channel matching one of the broadcast channels registered during the previously executed preset process and to shift to a next broadcast channel.

Specifically, first, the first preset process is executed to select sequentially one of the plurality of broadcast channels, attempt to detect the first broadcast signal subjected to the first modulation mode, in each of the selected broadcast channels, and register broadcast channels in which the first broadcast signal is detected. Then, the second preset process is executed to select sequentially one of the plurality of broadcast channels. During the selection, if the channel to be selected matches one of the broadcast channels already registered during the first preset process, then the selection of this broadcast channel is skipped and the next broadcast channel is selected. Then, an attempt is made to detect the second broadcast signal subjected to the second modulation mode, in the selected channel. In this manner, broadcast channels in which the second broadcast signal is detected are registered.

The first preset process executes a demodulation process corresponding to the first modulation mode, on a signal received through the selected broadcast channel. It then attempts to detect the synchronization signal in the demodulated signal, and determines whether or not the received signal is the first broadcast signal, on the basis of the result of the synchronization detection and the demodulated signal. Further, the second preset process executes a demodulation process corresponding to the second modulation mode, on a signal received through the selected broadcast channel. It then attempts to detect the synchronization signal in the demodulated signal, and determines whether or not the received signal is the second broadcast signal, on the basis of the result of the synchronization detection and the demodulated signal.

Furthermore, the apparatus selects one of a plurality of channels preset by the first and second preset process means, demodulates a broadcast signal from the selected channel, and records information included in the demodulated signal.

Furthermore, for the preset control, it is possible to make selection as to which of the first and second preset processes are to be executed first. This selection is based on, for example, the area or the modulation mode.

Further, if in any frequency band, all the broadcast signals are modulated using the same modulation mode, then the preset control process controls the selection of a broadcast channel so as to skip this frequency band during one of the first and second preset processes which detects the broadcast signal not corresponding to this modulation mode. The frequency band in which all the broadcast signals are modulated using the same modulation mode is, for example, the frequency band of cable broadcast.

With the above arrangement, the selection of broadcast channels already registered during the previous preset process is skipped during the subsequent preset process. Consequently, when for example, for each of the negative and positive modulating broadcast methods, broadcast channels are automatically searched for and preset, it is possible to reduce the time required to search for broadcast channels.

## Claims

1. A broadcast receiving apparatus **characterized by** comprising:
First preset process means (18, 19, 22, 25, 28, 29) for selecting one of a plurality of broadcast channels, attempting to detect a first broadcast signal subjected to a first modulation mode in each of the selected broadcast channels, and registering broadcast channels in which the first broadcast signal is detected;
second preset process means for selecting one of the plurality of broadcast channels, attempting to detect a second broadcast signal subjected to a second modulation mode in each of the selected broadcast channels, and registering broadcast channels in which the second broadcast signal is detected; and
preset control means (25) for providing control that sequentially executes either the first or second preset process means in response to a preset request and skips an operation of detecting the broadcast signals for the broadcast channels detected during the subsequently executed preset process means and matching the broadcast channels registered during the previously executed preset process means.

2. A broadcast reception apparatus according to claim 1, **characterized in that**
the preset controlling means (25) provides control when one of the broadcast channels is selected during the subsequently executed preset process means, so as to skip the selection of a broadcast channel matching one of the broadcast channels registered during the previously executed preset process means and to shift to a next broadcast channel.

3. A broadcast reception apparatus according to claim 1, **characterized in that**
the first preset process means (18, 19, 22, 25, 28, 29) includes,
means (18) for executing a demodulation process corresponding to the first modulation mode, on a signal received through the selected broadcast channel,
means (29) for attempting to detect a first synchronization signal in the demodulated signal, and
means (25) for determining whether or not the received signal is the first broadcast signal, on the basis of the result of the synchronization detection and the demodulated signal;
the second preset process means (18, 19, 22, 25, 28, 29) includes,
means (18) for executing a demodulation process corresponding to the second modulation mode,
on a signal received through the selected broadcast channel,
means (29) for attempting to detect a second synchronization signal in the demodulated signal, and
means (25) for determining whether or not the received signal is the second broadcast signal, on the basis of the result of the synchronization detection and the demodulated signal.

4. A broadcast reception apparatus according to claim 1, **characterized by** further comprising:
selecting means (18) for selecting one of a plurality of channels preset by the first and second preset process means (18, 19, 22, 25, 28, 29);
demodulating means (19, 22) for demodulating a broadcast signal from a broadcast channel selected by the selecting means (18);
recording means (36) for recording information which includes the broadcast signal demodulated by the demodulating means (19, 22).

5. A broadcast receiving apparatus according to claim 1, **characterized by** further comprising:
selecting means (15) for selecting which of the first and second preset process means (18, 19, 22, 25, 28, 29) are to be executed first for the preset control means (25) .

6. A broadcast receiving apparatus according to claim 5, **characterized in that**
the selecting means (15) selects based on the area.

7. A broadcast receiving apparatus according to claim 5, **characterized in that**
the selecting means (15) selects based on the modulated mode.

8. A broadcast receiving apparatus according to claim 5, **characterized in that**
the preset control means (25), if in any frequency band (A1 to An, B1 to Bn), all the broadcast signals are modulated using the same modulation mode, controls the selection of a broadcast channel so as to skip this frequency band during one of the first and second preset process means (18, 19, 22, 25, 28, 29) which detects the broadcast signal not corresponding to this modulation mode.

9. A broadcast receiving apparatus according to claim 8, **characterized in that**
The frequency band in which all the broadcast signals are modulated using the same modulation mode is the frequency band (A1 to An, B1 to Bn) of cable broadcast.

10. A broadcast receiving method **characterized by** comprising:
a first preset process step which is executed to select sequentially one of the plurality of broadcast channels, attempt to detect the first broadcast signal subjected to the first modulation mode, in each of the selected broadcast channels, and register broadcast channels in which the first broadcast signal is detected; and
a second preset process step which is executed to select sequentially one of the plurality of broadcast channels, during the selection, if the channel to be selected matches one of the broadcast channels already registered during the first preset process, then skip the selection of the broadcast channel and select the next broadcast channel, then, attempt to detect the second broadcast signal subjected to the second modulation mode, in the selected channel, and in this manner, register broadcast channels in which the second broadcast signal is detected.
